# EUROPÄISCHE PATENTANMELDUNG

(11) **EP 3 968 108 A1**
(43) Veröffentlichungstag der Anmeldung: **16.03.2022**
(21) Anmeldenummer: 20196314.7
(22) Anmeldetag: 15.09.2020
(51) Int. Cl.: G05B 19/05

(54) **STEUERUNG EINES TECHNISCHEN SYSTEMS MIT EINER RECHENEINHEIT FÜR KÜNSTLICHE INTELLIGENZ**

(71) Anmelder: Siemens Aktiengesellschaft, 80333 München (DE)
(72) Erfinder: Botero Halblaub, Andrés, 85614 Kirchseeon (DE); Schenk, Tim, 84034 Landshut (DE); Thon, Ingo, 85630 Grasbrunn (DE); Wincheringer, Christoph, 81369 München (DE)

(57) **Zusammenfassung**

Die Erfindung betrifft ein computerimplementiertes Verfahren zum Steuern eines technischen Systems mit den Verfahrensschritten:
- Einlesen (S1) von Hardware-Konfigurationsparametern und eines Werts einer Echtzeitanforderung einer Steuereinheit,
- Einlesen (S2) von Hardware-Konfigurationsparametern einer Recheneinheit für künstliche Intelligenz (NPU),
- Einlesen (S3) einer Steuerapplikation zum Steuern des technischen Systems, wobei die Steuerapplikation eingerichtet ist, in Abhängigkeit einer künstlichen Intelligenz einen Eingabewert für die Steuereinheit zu generieren,
- Ermitteln (S4) einer Bearbeitungszeit der Steuerapplikation für eine Ausführung der Steuerapplikation auf der Recheneinheit für künstliche Intelligenz unter Berücksichtigung der Hardware-Konfigurationsparameter der Steuereinheit und der Hardware- Konfigurationsparameter der Recheneinheit für künstliche Intelligenz,
- Prüfen (S5) der ermittelten Bearbeitungszeit anhand des Wertes der Echtzeitanforderung der Steuereinheit und Ausgeben eines Prüfungsergebnisses,
und
- Ausgeben (S6) der Steuerapplikation in Abhängigkeit des Prüfungsergebnisses zum Steuern des technischen Systems.

## Beschreibung

Die Erfindung betrifft ein computerimplementiertes Verfahren zum Steuern eines technischen Systems, eine Vorrichtung zum Steuern eines technischen Systems und ein Steuerungssystem umfassend eine Recheneinheit für künstliche Intelligenz (KI).

Zur Beschleunigung von speziellen Berechnungen, wie z.B. Deep Learning Inferenz mit künstlichen neuronalen Netzen, können spezialisierte System-on-a-Chip Lösungen genutzt werden, sogenannte KI-Beschleuniger, die auch als Recheneinheit für künstliche Intelligenz (KI) oder Neural Processor bzw. Neural Processing Unit (kurz NPU) bezeichnet werden können.

Da solche KI-basierten Algorithmen zunehmend auch in der industriellen Automatisierung eingesetzt werden, können solche speziellen Recheneinheiten für KI auch in Industriesteuerungen zur Steuerung von industriellen Anlagen oder Maschinen integriert werden.

Im Gegensatz zu den typischen Anwendungsbereichen von KI-Beschleunigern müssen die Algorithmen in der industriellen Automatisierung allerdings i.d.R. harte Echtzeitanforderungen einhalten, wie z.B. eine maximalen Zykluszeit einer speicherprogrammierbaren Steuerung (engl. Programmable Logic Controller, PLC), was von einer solchen speziellen Recheneinheit für künstliche Intelligenz typischerweise nicht vorgesehen ist, so dass lediglich eine Einbindung in nicht-echtzeitkritische Steuerungsabläufe möglich ist.

Es ist daher eine Aufgabe der Erfindung, eine Einbindung einer Recheneinheit für künstliche Intelligenz/eines KI-Beschleunigers in echtzeitkritische Steuerungsabläufe zu ermöglichen.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt. Gemäß einem ersten Aspekt betrifft die Erfindung ein computerimplementiertes Verfahren zum Steuern eines technischen Systems mit den Verfahrensschritten:
- Einlesen von Hardware-Konfigurationsparametern und eines Werts einer Echtzeitanforderung einer Steuereinheit,
- Einlesen von Hardware-Konfigurationsparametern einer Recheneinheit für künstliche Intelligenz,
- Einlesen einer Steuerapplikation zum Steuern des technischen Systems, wobei die Steuerapplikation eingerichtet ist, in Abhängigkeit einer künstlichen Intelligenz einen Eingabewert für die Steuereinheit zu generieren,
- Ermitteln einer Bearbeitungszeit der Steuerapplikation für eine Ausführung der Steuerapplikation auf der Recheneinheit für künstliche Intelligenz unter Berücksichtigung der Hardware-Konfigurationsparameter der Steuereinheit und der Hardware- Konfigurationsparameter der Recheneinheit für künstliche Intelligenz,
- Prüfen der ermittelten Bearbeitungszeit anhand des Wertes der Echtzeitanforderung der Steuereinheit und Ausgeben eines Prüfungsergebnisses,
   und
- Ausgeben der Steuerapplikation in Abhängigkeit des Prüfungsergebnisses zum Steuern des technischen Systems.

Das Verfahren kann insbesondere zumindest teilweise computer-/rechnergestützt bzw. computerimplementiert sein. Unter "computer-/rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle, wie z. B. eine Netzwerkschnittstelle, eine Kommunikationsschnittstelle oder eine Schnittstelle zu einer Speichereinheit. Über eine solche Schnittstelle können beispielsweise beim Bereitstellen entsprechende Daten und/oder Informationen übermittelt und/oder gesendet und/oder abgerufen und/oder empfangen werden.

Unter einem "Hardwarekonfigurationsparameter einer Steuereinheit" kann im Zusammenhang der Erfindung beispielsweise ein PLC-Typ, wie z.B. Typ und Parameter des Rückwand-Busses, Anzahl und Baugruppentypen etc. verstanden werden.

Unter einer "Echtzeitanforderung" kann im Zusammenhang der Erfindung eine Zeitspanne oder Zeitpunkt für einen Prozess der Steuereinheit verstanden werden, in der oder zu dem der Prozess abgewickelt werden soll. Ein "Wert einer Echtzeitanforderung" kann demnach eine solche Bedingung in einer Zeiteinheit sein.

Unter "Steuerapplikation" kann im Zusammenhang der Erfindung insbesondere eine Software-Anwendung/Applikation verstanden werden, die zur Steuerung eines technischen Systems geeignet ist, d.h. die beispielsweise mindestens einen Eingabewert für eine Steuereinheit eines technischen Systems bereitstellt. Die Steuerapplikation ist eingerichtet, in Abhängigkeit einer künstlichen Intelligenz einen Eingabewert für die Steuereinheit zu generieren. In anderen Worten, es kann sich hierbei um eine KI-basierte Steuerapplikation handeln. Beispielsweise ist die künstliche Intelligenz als ein künstliches neuronales Netz realisiert, so dass beim Einlesen der Steuerapplikation insbesondere jeweils eine Anzahl und ein Typ von Eingabeknoten und Ausgabeknoten des künstlichen neuronalen Netzes eingelesen werden.

Unter einer "Recheneinheit für künstliche Intelligenz" kann im Zusammenhang der Erfindung insbesondere ein KI-Beschleuniger oder eine Neural Processing Unit verstanden werden. Bei einer solchen Recheneinheit handelt es sich vorzugsweise um eine Recheneinheit, die spezifisch für eine Berechnung in Abhängigkeit einer künstlichen Intelligenz geeignet ist, d.h. eine spezifische Recheneinheit für KI bzw. eine Recheneinheit, die dafür geeignet ist, eine KI-basierte Applikation auszuführen. In anderen Worten, die Recheneinheit kann insbesondere einer KI-Berechnung zugeordnet sein, wie z.B. eine Berechnung mittels eines künstlichen neuronalen Netzes.

Unter einer "Hardwarekonfiguration der Recheneinheit für künstliche Intelligenz" kann im Zusammenhang der Erfindung insbesondere Informationen über die Hardware-Komponenten der Recheneinheit/NPU-Baugruppe verstanden werden, wie z.B. Prozessortaktung, Speichertaktung, und/oder Bandbreite der Busse.

Unter einer "Bearbeitungszeit" kann insbesondere auch Verarbeitungsdauer, Gesamtberechnungszeit, Gesamtausführungsdauer, oder Durchführungszeit mit Bezug auf die Ausführung der Steuerapplikation auf der Recheneinheit für KI verstanden werden.

Mit der Erfindung kann geprüft werden, ob die Steuerapplikation einer Echtzeitanforderung der Steuereinheit genügt. Dabei wird insbesondere geprüft, ob bei einer Ausführung der KI-basierten Steuerapplikation auf der Recheneinheit für künstliche Intelligenz die Echtzeitanforderung eingehalten wird. Somit ist ein Vorteil der vorliegenden Erfindung, dass für einen auf einer Recheneinheit für künstliche Intelligenz/einem KI-Beschleuniger ausgeführte Steuerapplikation bestimmt werden kann, ob diese für eine Steuerung eines echtzeitkritischen Systems genutzt werden kann bzw. geeignet ist. Dies wird insbesondere spezifisch für die entsprechende Hardware geprüft.

In einer Ausführungsform kann die Bearbeitungszeit
- eine Übertragungszeit für eine Datenübertragung zwischen der Steuereinheit und der Recheneinheit für künstliche Intelligenz
   und/oder
- eine Ausführungszeit der Ausführung der Applikation auf der Recheneinheit für künstliche Intelligenz umfassen.

In einer Ausführungsform kann die Ausführungszeit mittels einer computergestützten Simulation der Ausführung der Steuerapplikation auf der Recheneinheit für künstliche Intelligenz ermittelt werden.

Dazu kann beispielsweise eine CPU-Simulation genutzt werden. Außerdem kann dabei das Cacheverhalten berücksichtigt werden.

In einer alternativen Ausführungsform kann die Ausführungszeit mittels einer Ausführung der Steuerapplikation auf der Recheneinheit für künstliche Intelligenz ermittelt werden.

Es ist auch möglich, die Bearbeitungszeit mit einer direkten Messung zu ermitteln. Dies ermöglicht jegliche Eigenschaften der spezifischen Recheneinheit zu berücksichtigen.

In einer Ausführungsform kann in Abhängigkeit des Prüfungsergebnisses
- der Wert der Echtzeitanforderung der Steuereinheit an die ermittelte Bearbeitungszeit angepasst werden,
   und/oder
- die Ausführungszeit der Steuerapplikation durch Modifikation der Steuerapplikation an den einen Wert der Echtzeitanforderung angepasst werden.

Dies ermöglicht, entweder ein Echtzeitkriterium zu überarbeiten und/oder die Steuerapplikation an die entsprechende Hardware anzupassen.

In einer Ausführungsform kann die Steuerapplikation iterativ modifiziert werden, bis die ermittelte Ausführungszeit der Steuerapplikation den Wert der Echtzeitanforderung der Steuereinheit erfüllt.

Insbesondere kann die Steuerapplikation mittels eines Optimierungsverfahrens modifiziert werden, wobei die Steuerapplikation iterativ angepasst wird, bis die Ausführungszeit minimiert wird.

In einer Ausführungsform kann die Steuerapplikation ein künstliches neuronales Netz umfassen und Knoten des neuronalen Netzes iterativ reduziert werden, bis die ermittelte Ausführungszeit der Steuerapplikation den Wert der Echtzeitanforderung erfüllt.

Dies ermöglicht beispielsweise Knoten des künstlichen neuronalen Netzes entfernt werden, die eine geringe Gewichtung aufweisen. Dies kann beispielsweise mit einer Sensitivitätsanalyse ermittelt werden. So kann, wie z.B. in Sensibilitätsanalysen, durch eine Anregung der Input-Signale kann das neuronale Netz untersucht werden, inwiefern ein Knoten für den Output der Berechnung beiträgt. Diejenigen Knoten mit geringem Einfluss können vernachlässigt werden.

In einer Ausführungsform kann die Steuerapplikation auf der Recheneinheit für künstliche Intelligenz ausgeführt, dadurch ein Eingabewert für die Steuereinheit generiert und das technische System auf Basis des Eingabewerts gesteuert werden.

Die Steuerapplikation kann insbesondere bei einem positiven Prüfungsergebnis, d.h. wenn die Bearbeitungszeit die Echtzeitanforderung genügt, ausgeführt werden.

Gemäß einem zweiten Aspekt betrifft die Erfindung eine Vorrichtung zum Steuern eines technischen Systems umfassend
- eine erste Schnittstelle, die derart eingerichtet ist, Hardware-Konfigurationsparameter und einen Wert einer Echtzeitanforderung einer Steuereinheit einzulesen,
- eine zweite Schnittstelle, die derart eingerichtet ist, Hardware-Konfigurationsparameter einer Recheneinheit für künstliche Intelligenz einzulesen,
- eine dritte Schnittstelle, die derart eingerichtet ist, eine Steuerapplikation zum Steuern des technischen Systems einzulesen, wobei die Steuerapplikation eingerichtet ist, in Abhängigkeit einer künstlichen Intelligenz einen Eingabewert für die Steuereinheit zu generieren,
- ein Analysemodul, das derart eingerichtet ist, eine Bearbeitungszeit der Steuerapplikation für eine Ausführung der Steuerapplikation auf der Recheneinheit für künstliche Intelligenz zum Generieren eines Eingabewerts für die Steuereinheit unter Berücksichtigung der Hardware-Konfigurationsparameter der Steuereinheit und der Hardware-Konfigurationsparameter der Recheneinheit für künstliche Intelligenz zu ermitteln,
- ein Prüfmodul, das derart eingerichtet ist, die ermittelte Bearbeitungszeit anhand des Wertes der Echtzeitanforderung der Steuereinheit zu prüfen und ein Prüfungsergebnis auszugeben,
   und
- ein Ausgabemodul, das derart eingerichtet ist, die Steuerapplikation in Abhängigkeit des Prüfungsergebnisses zum Steuern des technischen Systems auszugeben.

Die Vorrichtung und/oder zumindest eines ihrer Schnittstellen bzw. Module kann insbesondere in Hardware und/oder Software eingerichtet sein. Vorzugsweise umfasst die Vorrichtung mindestens einen Prozessor. Die Vorrichtung ist vorzugsweise mit der Steuereinheit des technischen Systems und der Recheneinheit für künstliche Intelligenz gekoppelt.

In einer Ausführungsform kann die Vorrichtung ein Simulationsmodul umfassen, das derart eingerichtet ist, eine Ausführungszeit mittels einer computergestützten Simulation der Ausführung der Steuerapplikation auf der Recheneinheit für künstliche Intelligenz zu ermitteln.

Unter einem "Simulationsmodul" kann auch eine Simulationsumgebung verstanden werden.

In einer Ausführungsform kann die Vorrichtung ein Optimierungsmodul umfassen, das derart eingerichtet ist, die Steuerapplikation iterativ zu modifizieren, bis die ermittelte Ausführungszeit der Steuerapplikation den Wert der Echtzeitanforderung der Steuereinheit erfüllt.

Das Optimierungsmodul weist vorzugsweise ein Optimierungsverfahren auf, mit dem die Steuerapplikation iterativ modifiziert werden kann, so dass die Ausführungszeit der Steuerapplikation minimiert wird. Das Optimierungsmodul ist vorzugsweise zumindest mit dem Analysemodul und dem Prüfmodul gekoppelt, so dass die Steuerapplikation iterativ modifiziert und geprüft werden kann bis die Ausführungszeit der Echtzeitanforderung genügt.

Gemäß einem weiteren Aspekt betrifft die Erfindung ein Steuerungssystem umfassend
- eine Vorrichtung gemäß der Erfindung,
- eine Recheneinheit für künstliche Intelligenz, die derart eingerichtet ist, eine Steuerapplikation zum Steuern des technischen Systems auszuführen, wobei die Steuerapplikation eingerichtet ist, in Abhängigkeit einer künstlichen Intelligenz einen Eingabewert für die Steuereinheit zu generieren,
- die Steuereinheit, die derart eingerichtet ist, auf Basis des durch die Steuerapplikation generierten Eingabewerts das technische System zu steuern.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele des erfindungsgemäßen Verfahrens, der erfindungsgemäßen Vorrichtung und des erfindungsgemäßen Steuerungssystems sind in den Zeichnungen beispielhaft dargestellt und werden anhand der nachfolgenden Beschreibung näher erläutert. Es zeigen:
- Fig. 1:: ein erstes Ausführungsbeispiel des erfindungsgemäßen Verfahrens;
- Fig. 2:: ein zweites Ausführungsbeispiel des erfindungsgemäßen Verfahrens; und
- Fig. 3:: ein Ausführungsbeispiel der erfindungsgemäßen Vorrichtung und des erfindungsgemäßen Steuerungssystems.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

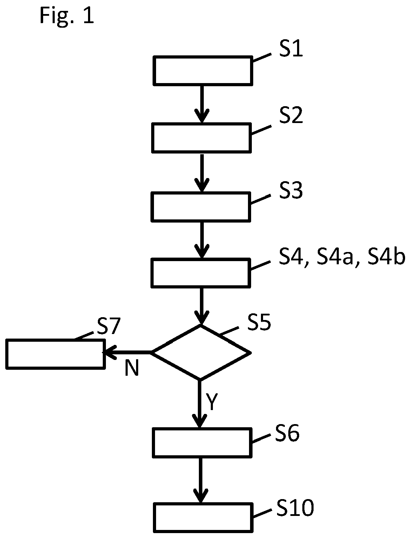

Figur 1 zeigt ein Ausführungsbeispiel des erfindungsgemäßen Verfahrens zum Steuern eines technischen Systems als Flussdiagramm. Das technische System kann hierbei beispielsweise eine industrielle Anlage, wie z.B. eine Produktionsanlage, ein Automatisierungsgerät oder ein Robotersystem sein. Insbesondere kann das technische System mit Hilfe einer Steuerapplikation auf Basis eines maschinellen Lernverfahrens/Machine-Learning-Algorithmus gesteuert werden, wobei die Steuerapplikation einen Eingabewert für eine Steuereinheit des technischen Systems ausgibt. Dafür ist die Steuereinheit mit einer Recheneinheit für künstliche Intelligenz gekoppelt, wobei die Steuerapplikation auf der Recheneinheit für künstliche Intelligenz ausgeführt wird.

Die Steuerung des technischen Systems kann eine Echtzeitanforderung aufweisen, die die Steuerapplikation bei Ausführung auf der Recheneinheit für künstliche Intelligenz einhalten muss. Dies kann mittels des nachfolgend beschriebenen Verfahrens geprüft werden, so dass die Steuerapplikation zur Steuerung des technischen Systems freigegeben und/oder ausgeführt werden kann.

Im ersten Schritt S1 des Verfahrens wird eine Hardware-Konfiguration bzw. Hardware-Spezifikation der Steuereinheit erfasst. Dazu werden Hardware-Konfigurationsparameter der Steuereinheit eingelesen, wie z.B. der PLC-Typ, Speichergrö-ße, Speichergeschwindigkeit, und/oder Busbandbreite. Außerdem wird mindestens ein Wert einer Echtzeitanforderung, d.h. beispielsweise eine zeitliche, obere Schranke, für einen Steuerungsprozess eingelesen. Die Echtzeitanforderung kann beispielsweise anhand der Hardware-Konfiguration bestimmt werden.

Im nächsten Schritt S2 werden Hardware-Konfigurationsparameter der Recheneinheit für künstliche Intelligenz eingelesen, wie z.B. Typ, Rechenleistung, NPU-Taktung/Größe, interne Bus-Geschwindigkeit und/oder Bandbreite.

Außerdem kann auch eine Information über eine Firmware und/oder Software der Recheneinheit für künstliche Intelligenz und/oder der Steuereinheit eingelesen werden.

Im nächsten Schritt S3 wird eine Steuerapplikation eingelesen, die zum Steuern des technischen Systems geeignet ist. Die Steuerapplikation ist derart eingerichtet, in Abhängigkeit einer künstlichen Intelligenz, z.B. einem künstlichen neuronalen Netz, einen Eingabewert für die Steuereinheit zu generieren und auszugeben. In anderen Worten, die Steuerapplikation basiert auf einer künstlichen Intelligenz. Außerdem ist die Steuerapplikation für eine Ausführung auf der Recheneinheit für künstliche Intelligenz eingerichtet.

Im nächsten Schritt S4 wird eine Bearbeitungszeit, vorzugsweise eine maximale oder minimale Bearbeitungszeit, für eine Ausführung der Steuerapplikation auf der Recheneinheit für künstliche Intelligenz ermittelt, wobei die Hardware-Konfigurationsparameter der Recheneinheit für künstliche Intelligenz und die Hardware-Konfigurationsparameter der Steuereinheit berücksichtigt werden, d.h. die Berechnung der Bearbeitungszeit wird spezifisch für diese Hardware-Konfigurationsparameter bestimmt. Optional können auch die Firmware und/oder Software der Recheneinheit für künstliche Intelligenz und/oder der Steuereinheit berücksichtigt werden.

Die Bearbeitungszeit umfasst dabei eine Übertragungszeit für eine Datenübertragung zwischen der Steuereinheit und der Recheneinheit für künstliche Intelligenz und/oder eine Ausführungszeit der Ausführung der Applikation auf der Recheneinheit für künstliche Intelligenz. In anderen Worten, die Bearbeitungszeit ist vorzugsweise die Summe der Übertragungszeit und der Ausführungszeit. Die Bearbeitungszeit gibt insbesondere die Zeit an, die für eine Ausführung der Steuerapplikation und Übermittlung des ausgegebenen Eingabewerts an die Steuereinheit benötigt wird.

Die Ausführungszeit kann insbesondere mittels einer computergestützten Simulation, Schritt S4a, der Ausführung der Steuerapplikation auf der Recheneinheit für künstliche Intelligenz ermittelt werden, wobei die Recheneinheit für künstliche Intelligenz auf Basis der Hardware-Konfigurationsparameter abgebildet/modelliert wird. Alternativ kann die Ausführungszeit auch direkt durch die Ausführung der Steuerapplikation auf der realen Recheneinheit für künstliche Intelligenz ermittelt werden, Schritt S4b.

Eine maximale Übertragungszeit zwischen einem Funktionsblock der Steuereinheit und der NPU-Baugruppe umfasst vorzugsweise die Anfrage und die Antwort zwischen diesen Komponenten. Es werden beispielsweise eine Brutto-Übertragungszeit über einen Rückwandbus (inkl. maximale Wartezeit vom Bus Request bis zum Bus Grant der Bus Arbitration Control), eine maximaler Taktversatz (maximum clock skew) bei Übergängen zwischen verschiedenen Zeitdomänen (clock domains) der Hardware und eine maximale Reaktionszeit der Interrupt Service Routinen des Steuerungssystems und der NPU-Baugruppe addiert.

Die maximale Ausführungszeit auf der NPU-Baugruppe umfasst beispielsweise eine maximale Ausführungszeit von atomaren Code-Segmenten (ohne ein-/ausgehende Verzweigungen). Diese können beispielsweise mittels Static Worst Case Execution Time Analysis berechnet bzw. simuliert werden. Dabei müssen zu Beginn des Code-Segments alle Caches als "kalt" angenommen werden, d.h. keine der benötigten Cache Lines enthalten. Die möglichen Berechnungen können auf verschiedenen Ressourcen parallel ausgeführt werden. Bei voller Parallelisierbarkeit stellt somit der längste Weg in einem Datenflussgraph der Steuerapplikation bzw. der künstlichen Intelligenz der Steuerapplikation die oberste Schranke der Ausführungszeit dar.

Im nächsten Schritt S5 wird geprüft, ob die ermittelte Bearbeitungszeit den Echtzeitanforderung der Steuereinheit genügt. Dazu wird die ermittelte Bearbeitungszeit mit dem mindestens einen Wert der Echtzeitanforderung verglichen.

Wenn die Bearbeitungszeit die Echtzeitanforderung der Steuereinheit erfüllt, Pfad Y, dann wird die Steuerapplikation zum Steuern des technischen Systems ausgegeben, Schritt S6 und Schritt S10. Dazu kann die Steuerapplikation auf der Recheneinheit für künstliche Intelligenz eingerichtet und ausgeführt werden, wobei die Steuerapplikation einen Eingabewert für die Steuereinheit generiert. Die Steuereinheit kann das technische System in Abhängigkeit dieses Eingabewerts steuern, Schritt S10.

Wenn die Bearbeitungszeit der Echtzeitanforderung der Steuereinheit nicht genügt, Pfad N, dann kann beispielsweise die Echtzeitanforderung angepasst werden, Schritt S7. Beispielsweise kann eine obere Schranke für die Bearbeitungszeit entsprechend modifiziert werden. Anschließend kann erneut eine Prüfung der Bearbeitungszeit anhand der modifizierten Echtzeitanforderungen erfolgen. Damit kann ein Steuerungssystem des technischen Systems angepasst werden, so dass eine vorgegebene KI-basierte Steuerapplikation genutzt werden kann.

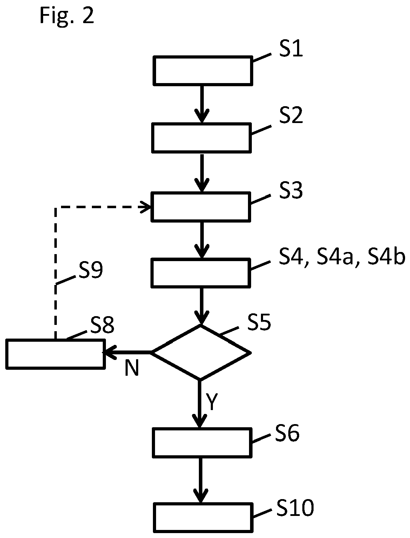

Figur 2 zeigt ein weiteres Ausführungsbeispiel des erfindungsgemäßen Verfahrens zum Steuern eines technischen Systems. Die Schritte S1 bis S6 und S10 entsprechen denen in Figur 1.

Wenn die Prüfung der Bearbeitungszeit, Schritt S5, ergibt, dass die Bearbeitungszeit nicht der Echtzeitanforderung der Steuereinheit des technischen Systems genügt, Pfad N, dann kann zusätzlich oder alternativ zu einer Anpassung der Echtzeitanforderung (Schritt S7 in Figur 1) die Steuerapplikation modifiziert werden, Schritt S8, damit die Ausführungszeit der Steuerapplikation an den Wert der Echtzeitanforderung angepasst wird.

Dazu kann die Steuerapplikation iterativ, Schritt S9, angepasst werden bis die resultierende Ausführungszeit die Echtzeitanforderung erfüllt. Beispielsweise kann die Steuerapplikation ein künstliches neuronales Netz umfassen, so dass Knoten des neuronalen Netzes iterativ reduziert werden, bis die ermittelte Ausführungszeit der Steuerapplikation den Wert der Echtzeitanforderung erfüllt. Dies kann beispielsweise durch ein Optimierungsverfahren gestützt sein, wobei das künstliche neuronale Netz so lange verändert/angepasst/reduziert wird, z.B. durch iteratives Entfernen oder Hinzufügen von Knoten, bis die dafür ermittelte Ausführungszeit maximal einer maximalen Zykluszeit der Steuereinheit entspricht. Beispielsweise kann dafür jeweils eine Sensitivitätsanalyse der jeweiligen Knoten durchgeführt werden, um diejenigen Knoten mit geringer Gewichtung zu eliminieren.

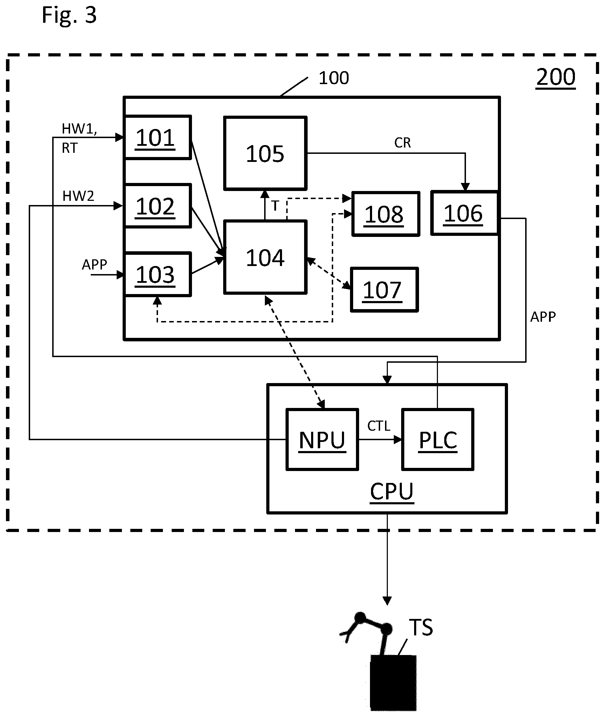

Figur 3 zeigt ein Ausführungsbeispiel der erfindungsgemäßen Vorrichtung 100 und des erfindungsgemäßen Steuerungssystems 200 zum Steuern eines technischen Systems TS. Die Vorrichtung 100 kann beispielsweise mit dem Steuerungssystem 200 gekoppelt oder in diesem integriert sein. Die Vorrichtung 100 ist vorzugsweise derart eingerichtet, die Schritte des Verfahrens wie in Figur 1 und/oder 2 gezeigt auszuführen.

Es ist das Steuerungssystem 200 gezeigt, das die Vorrichtung 100, eine Recheneinheit für künstliche Intelligenz NPU, wie z.B. eine Neural Processing Unit, und eine Steuereinheit PLC umfasst. Das technische System kann beispielsweise ein bildgesteuertes Robotersystem sein, das in Abhängigkeit eines Machine-Learning-Algorithmus gesteuert werden kann. Das Steuersystem 200 umfasst vorzugsweise mindestens einen Prozessor CPU, der Daten der Neural Processing Unit NPU und der Steuereinheit PLC zentral prozessiert.

Die Vorrichtung 100 umfasst eine erste Schnittstelle 101, die derart eingerichtet ist, Hardware-Konfigurationsparameter HW1 und einen den Wert einer Echtzeitanforderung RT der Steuereinheit PLC einzulesen, und eine zweite Schnittstelle 102, die derart eingerichtet ist, Hardware-Konfigurationsparameter HW2 der Recheneinheit für künstliche Intelligenz NPU einzulesen. Außerdem umfasst die Vorrichtung 100 eine dritte Schnittstelle 103, die derart eingerichtet ist, eine Steuerapplikation APP zum Steuern des technischen Systems einzulesen. Die Steuerapplikation APP ist eingerichtet, in Abhängigkeit einer künstlichen Intelligenz einen Eingabewert für die Steuereinheit zu generieren. Die Vorrichtung 100 umfasst weiter ein Analysemodul 104, das derart eingerichtet ist, eine Bearbeitungszeit T der Steuerapplikation für eine Ausführung der Steuerapplikation APP auf der Recheneinheit für künstliche Intelligenz NPU zum Generieren eines Eingabewerts für die Steuereinheit unter Berücksichtigung der Hardware-Konfigurationsparameter HW1 der Steuereinheit und der Hardware-Konfigurationsparameter HW2 der Recheneinheit für künstliche Intelligenz zu ermitteln. Die Vorrichtung umfasst weiter ein Prüfmodul 105, das derart eingerichtet ist, die ermittelte Bearbeitungszeit T anhand des Wertes der Echtzeitanforderung der Steuereinheit zu prüfen und ein Prüfungsergebnis CR auszugeben, und ein Ausgabemodul 106, das derart eingerichtet ist, die Steuerapplikation APP bei einem positiven Prüfungsergebnis zum Steuern des technischen Systems TS auszugeben. Die Prüfung umfasst beispielsweise einen Vergleich der Bearbeitungszeit mit dem Wert der Echtzeitanforderung. Das Prüfungsergebnis ist insbesondere positiv, wenn die Bearbeitungszeit T der Steuerapplikation APP die Echtzeitanforderung RT der Steuereinheit PLC erfüllt.

Vorzugsweise wird die Bearbeitungszeit T mittels einer computergestützten Simulation, z.B. einer CPU-Simulation, der Ausführung der Steuerapplikation APP auf der Neural Processing Unit NPU ermittelt. Dazu kann die Vorrichtung 100 ein Simulationsmodul 107 umfassen, das derart eingerichtet ist, ein solche computergestützte Simulation durchzuführen. Das Simulationsmodul 107 ist vorzugsweise mit dem Analysemodul 104 gekoppelt. Für die Berechnung werden insbesondere die Hardware-Konfigurationsparameter HW2 der Neural Processing Unit NPU an das Simulationsmodul 107 übermittelt, so dass eine spezifische computergestützte Simulation für diese Neural Processing Unit NPU durchgeführt werden kann.

Wenn die Steuerapplikation APP die Echtzeitanforderungen RT der Steuereinheit erfüllt, wird die Steuerapplikation auf der Neural Processing Unit NPU ausgeführt und liefert einen Eingabewert CTL für die Steuereinheit PLC zum Steuern des technischen Systems TS.

Wenn das Prüfmodul 105 ein negatives Prüfergebnis ausgibt, d.h. wenn die Bearbeitungszeit T der Steuerapplikation APP nicht der Echtzeitanforderung RT genügt, kann mittels eines optionalen Optimierungsmodul 108 die Ausführungszeit der Steuerapplikation optimiert werden bis die Echtzeitanforderung RT erfüllt ist. Das Optimierungsmodul 108 ist derart eingerichtet, die Steuerapplikation APP iterativ zu modifizieren, bis die ermittelte Ausführungszeit der Steuerapplikation den Wert der Echtzeitanforderung der Steuereinheit erfüllt. Beispielsweise kann ein der Steuerapplikation APP zugrunde liegendes Machine-Learning-Modell reduziert werden, wobei beispielsweise Knoten eines künstlichen neuronalen Netzes entfernt werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Computerimplementiertes Verfahren zum Steuern eines technischen Systems (TS) mit den Verfahrensschritten:
- Einlesen (S1) von Hardware-Konfigurationsparametern (HW1) und eines Werts einer Echtzeitanforderung (RT) einer Steuereinheit (PLC),
- Einlesen (S2) von Hardware-Konfigurationsparametern (HW2) einer Recheneinheit für künstliche Intelligenz (NPU),
- Einlesen (S3) einer Steuerapplikation (APP) zum Steuern des technischen Systems, wobei die Steuerapplikation eingerichtet ist, in Abhängigkeit einer künstlichen Intelligenz einen Eingabewert (CTL) für die Steuereinheit zu generieren,
- Ermitteln (S4) einer Bearbeitungszeit der Steuerapplikation für eine Ausführung der Steuerapplikation auf der Recheneinheit für künstliche Intelligenz unter Berücksichtigung der Hardware-Konfigurationsparameter der Steuereinheit und der Hardware- Konfigurationsparameter der Recheneinheit für künstliche Intelligenz,
- Prüfen (S5) der ermittelten Bearbeitungszeit (T) anhand des Wertes der Echtzeitanforderung (RT) der Steuereinheit und Ausgeben eines Prüfungsergebnisses,
und
- Ausgeben (S6) der Steuerapplikation in Abhängigkeit des Prüfungsergebnisses zum Steuern des technischen Systems.

2. Computerimplementiertes Verfahren nach Anspruch 1, wobei die Bearbeitungszeit (T)
- eine Übertragungszeit für eine Datenübertragung zwischen der Steuereinheit und der Recheneinheit für künstliche Intelligenz
und/oder
- eine Ausführungszeit der Ausführung der Applikation auf der Recheneinheit für künstliche Intelligenz umfasst.

3. Computerimplementiertes Verfahren nach Anspruch 2, wobei die Ausführungszeit mittels einer computergestützten Simulation der Ausführung der Steuerapplikation auf der Recheneinheit für künstliche Intelligenz ermittelt wird (S4a).

4. Computerimplementiertes Verfahren nach Anspruch 2, wobei die Ausführungszeit mittels einer Ausführung der Steuerapplikation auf der Recheneinheit für künstliche Intelligenz ermittelt wird (S4b).

5. Computerimplementiertes Verfahren nach einem der vorhergehenden Ansprüche, wobei in Abhängigkeit des Prüfungsergebnisses
- der Wert der Echtzeitanforderung der Steuereinheit an die ermittelte Bearbeitungszeit angepasst wird (S7),
und/oder
- die Ausführungszeit der Steuerapplikation durch Modifikation der Steuerapplikation an den einen Wert der Echtzeitanforderung angepasst wird (S8).

6. Computerimplementiertes Verfahren nach Anspruch 5, wobei die Steuerapplikation iterativ modifiziert wird (S9), bis die ermittelte Ausführungszeit der Steuerapplikation den Wert der Echtzeitanforderung der Steuereinheit erfüllt.

7. Computerimplementiertes Verfahren nach einem der vorhergehenden Ansprüche, wobei die Steuerapplikation ein künstliches neuronales Netz umfasst und Knoten des neuronalen Netzes iterativ reduziert werden, bis die ermittelte Ausführungszeit der Steuerapplikation den Wert der Echtzeitanforderung erfüllt.

8. Computerimplementiertes Verfahren nach einem der vorhergehenden Ansprüche, wobei die Steuerapplikation (APP) auf der Recheneinheit für künstliche Intelligenz (NPU) ausgeführt, dadurch ein Eingabewert (CTL) für die Steuereinheit (PLC) generiert und das technische System auf Basis des Eingabewerts gesteuert wird (S10).

9. Vorrichtung (100) zum Steuern eines technischen Systems (TS) umfassend
- eine erste Schnittstelle (101), die derart eingerichtet ist, Hardware-Konfigurationsparameter (HW1) und einen Wert einer Echtzeitanforderung (RT) einer Steuereinheit (PLC) einzulesen,
- eine zweite Schnittstelle (102), die derart eingerichtet ist, Hardware-Konfigurationsparameter (HW2) einer Recheneinheit für künstliche Intelligenz (NPU) einzulesen,
- eine dritte Schnittstelle (103), die derart eingerichtet ist, eine Steuerapplikation (APP) zum Steuern des technischen Systems einzulesen, wobei die Steuerapplikation (APP) eingerichtet ist, in Abhängigkeit einer künstlichen Intelligenz einen Eingabewert für die Steuereinheit (PLC) zu generieren,
- ein Analysemodul (104), das derart eingerichtet ist, eine Bearbeitungszeit (T) der Steuerapplikation für eine Ausführung der Steuerapplikation auf der Recheneinheit für künstliche Intelligenz zum Generieren eines Eingabewerts für die Steuereinheit unter Berücksichtigung der Hardware-Konfigurationsparameter (HW1) der Steuereinheit und der Hardware- Konfigurationsparameter (HW2) der Recheneinheit für künstliche Intelligenz zu ermitteln,
- ein Prüfmodul (105), das derart eingerichtet ist, die ermittelte Bearbeitungszeit (T) anhand des Wertes der Echtzeitanforderung der Steuereinheit zu prüfen und ein Prüfungsergebnis (CR) auszugeben,
und
- ein Ausgabemodul (106), das derart eingerichtet ist, die Steuerapplikation in Abhängigkeit des Prüfungsergebnisses zum Steuern des technischen Systems auszugeben.

10. Vorrichtung nach Anspruch 9, umfassend ein Simulationsmodul (107), das derart eingerichtet ist, eine Ausführungszeit mittels einer computergestützten Simulation der Ausführung der Steuerapplikation (APP) auf der Recheneinheit für künstliche Intelligenz zu ermitteln.

11. Vorrichtung nach Anspruch 9 oder 10, umfassend ein Optimierungsmodul (108), das derart eingerichtet ist, die Steuerapplikation iterativ zu modifizieren, bis die ermittelte Ausführungszeit der Steuerapplikation (APP) den Wert der Echtzeitanforderung (RT) der Steuereinheit erfüllt.

12. Steuerungssystem (200) umfassend
- eine Vorrichtung (100) nach einem der Ansprüche 9 bis 11,
- eine Recheneinheit (NPU) für künstliche Intelligenz, die derart eingerichtet ist, eine Steuerapplikation (APP) zum Steuern des technischen Systems auszuführen, wobei die Steuerapplikation eingerichtet ist, in Abhängigkeit einer künstlichen Intelligenz einen Eingabewert (CTL) für die Steuereinheit zu generieren,
- die Steuereinheit (PLC), die derart eingerichtet ist, auf Basis des durch die Steuerapplikation generierten Eingabewerts das technische System zu steuern.

13. Computerprogrammprodukt, das direkt in einen programmierbaren Computer ladbar ist, umfassend Programmcodeteile, die dazu geeignet sind, die Schritte des Verfahrens nach einem der Ansprüche 1 bis 8 durchzuführen.
